# EUROPÄISCHE PATENTSCHRIFT

(11) **EP 3 024 363 B1**
(45) Veröffentlichungstag und Bekanntmachung des Hinweises auf die Patenterteilung: **01.11.2017**
(21) Anmeldenummer: 14739178.3
(22) Anmeldetag: 16.07.2014
(51) Int. Cl.: A47J 31/36

(54) **KAFFEEVOLLAUTOMAT MIT TOLERANZAUSGLEICH AM BRÜHKOLBEN**
FULLY AUTOMATIC COFFEEMAKER WITH TOLERANCE ACCOMMODATION AT THE HEATING ELEMENT
MACHINE À CAFÉ À COMPENSATION DE TOLÉRANCES AU NIVEAU DU PISTON D'INFUSION

(30) Priorität: 25.07.2013 DE 102013214603
(43) Veröffentlichungstag der Anmeldung: 01.06.2016
(73) Patentinhaber: BSH Hausgeräte GmbH, 81739 München (DE)
(72) Erfinder: HASLACHER, Christian, 5303 Thalgau (AT); HUBER, Michael, 6341 Ebbs (AT); STROBL, Robert, 83246 Unterwössen (DE)
(86) Internationale Anmeldenummer: PCT/EP2014/065211
(87) Internationale Veröffentlichungsnummer: WO 2015/010978

(56) Entgegenhaltungen:
- EP-A1- 1 360 919
- WO-A1-2009/056426
- WO-A2-2009/016444
- DE-C1- 19 647 385

## Beschreibung

Die Erfindung betrifft einen Kaffeevollautomaten, insbesondere für Haushaltszwecke, mit einer Brühvorrichtung und einem Gehäuse dafür, in dem eine angetriebene und verlagerbare Brühkammer geführt ist und an dem ein ortsfest gelagerter Brühkolben befestigt ist. Der Kaffeevollautomat kann beispielsweise über eine Kniehebelbrüheinheit verfügen. Die Erfindung betrifft insbesondere einen Kaffeevollautomaten mit einer Spindelbrüheinheit mit einer Brühvorrichtung aus einer Brühkammer und einem Brühkolben, einer Gewindespindel zum Antrieb der Brühkammer über einen Verbindungsarm als Spindelmutter, womit die Brühkammer seitlich neben der Gewindespindel angeordnet ist. Die Brühvorrichtung wird umgeben von einem C-förmigen Gehäuse mit einem Ständerabschnitt parallel zur Gewindespindel, einem Bodenabschnitt sowie einem Deckenabschnitt, die sich im Wesentlichen orthogonal zur Gewindespindel erstrecken.

Einen derartigen Kaffeevollautomaten offenbart zum Beispiel die WO 2009 056 426 A1. Sie zeigt ebenfalls eine zylindrische Brühkammer, die über einen Verbindungsarm mit einer Gewindespindel verbunden und damit seitlich neben der Gewindespindel angeordnet ist. Ein C-förmiges Gehäuse des Kaffeevollautomaten nimmt die Brühvorrichtung auf. Es muss sehr steif ausgebildet sein, für den Brühvorgang wird die Brühkammer nach oben gegen den starr eingespannten zylindrischen Brühkolben verfahren und mit unter Druck stehendem Zubereitungswasser beaufschlagt. Die dabei auftretenden Kräfte bewirken eine Momentenbelastung aus der Brühkammer auf die Gewindespindel und aus dem Brühkolben auf das Gehäuse. Das Gehäuse und die Brühvorrichtung müssen so steif ausgebildet sein, dass sie ein Verschränken der im Normalfall parallel zur Gewindespindel stehenden Zylinderachsen des Brühkolbens und der Brühkammer gegeneinander weitgehend vermeiden.

Aus den Druckschriften EP 1 360 919 A1, DE 196 47 358 C1 und WO 2009/016444 A2 sind jeweils Brühgeräte aufweisend bewegbare Brühkolben bekannt.

Aufgabe der Erfindung ist es, einen Kaffeevollautomaten bereitzustellen, bei dem Verformungen durch Beaufschlagung der Brühkammer mit Brühdruck wenigstens minimiert wird.

Diese Aufgabe wird bei dem eingangs genannten Kaffeevollautomaten erfindungsgemäß dadurch gelöst, dass der Brühkolben in einem Lager gehaltert ist, das mindestens zwei der drei translatorischen und der drei rotatorischen Freiheiten bzw. Freiheitsgrade in den drei geometrischen Raumrichtungen bietet. Der Brühkolben kann also gegenüber dem Deckenabschnitt des Gehäuses beispielsweise verschiebbar und/oder kippbar gelagert sein. Dafür können unterschiedliche Lagertypen verwendet werden, regelmäßig Gleit- oder Wälzlager. Die Erfindung wendet sich also davon ab, das Gehäuse, die Gewindespindel und die Brühkammer samt Verbindungsarm möglichst steif und belastbar zu gestalten und insbesondere den Brühkolben starr zu lagern. Sie verfolgt vielmehr das Prinzip, dem Brühkolben ein gewisses Spiel gegenüber dem Deckenabschnitt zu ermöglichen, so dass sich der Brühkolben bei einem Verkippen der Brühkammer zumindest geringfügig daran anpassen kann. Damit können Zwängungen vermieden werden, die anderenfalls zumindest eine Abdichtung zwischen dem Brühkolben und der Brühkammer belasten würden. Eine Reduktion oder ein Wegfall dieser Verformungsbelastung kann der Abdichtung, regelmäßig ein O-Ring, eine höhere Lebensdauer verleihen. Schließlich kann die gesamte Brüheinheit weniger materialaufwändig ausgebildet werden, weil sie nicht so steif und toleranzkritisch konstruiert zu werden braucht. Infolgedessen können ihre Einzelteile mit größeren Toleranzen, materialsparender und daher kostengünstiger hergestellt werden. Außerdem kann Materialverschleiß reduziert werden, der durch den Brühdruck beim Brühvorgang entsteht.

Unter der Druckbelastung des Brühvorgangs erhält die Brühkammer die Neigung, gegenüber der Gewindespindel abwärts zu kippen. Grundsätzlich kann das erfindungsgemäße Lager daher zum Ausgleich ein horizontales Verschieben oder Verkippen des Brühkolbens um eine horizontale Kippachse ermöglichen. Nach einer vorteilhaften Ausgestaltungsform der Erfindung bietet das Lager jedoch mehr als einen und genau zwei Freiheitsgrade. Damit kann ein Verklemmen zwischen der Brühkammer und dem Brühkolben weitgehend vermieden werden. Die mindestens oder genau zwei Freiheitsgrade des erfindungsgemäßen Lagers werden dabei durch Translationen oder Rotationen in zwei orthogonal zueinander stehenden Achsen in einer Ebene senkrecht zur Brühkolbenachse dargestellt. Ein Drehen um die und eine Verschiebung entlang der Brühkolbenachse können zwar als dritter und ggf. vierter Freiheitsgrad dazukommen, sind aber zur Lösung der erfindungsgemäßen Aufgabe weitgehend ohne Bedeutung, weil sie einem Verklemmen zwischen dem Brühkolben und der Brühkammer nicht ausreichend entgegenwirken. Erfindungsgemäß relevante Freiheitsgrade sind folglich die Translationen orthogonal zur Brühkolbenachse und die Rotationen um dieselben Achsen.

Lagerungen mit wenigstens jenen zwei Freiheitsgraden bieten sich in mehreren, teilweise kombinierbaren Ausführungsvarianten zur Lösung der Aufgabe an: In der ersten Ausführungsvariante weist der erfindungsgemäße Kaffeevollautomat ein zweiachsiges Linearlager am Brühkolben auf, beispielsweise ein Gleitlager oder Plattengelenk, das eine Verschiebung des Brühkolbens in zwei horizontale Raumrichtungen zulässt. Denn der erfindungsgemäße Zweck ist bereits mit verhältnismäßig geringen Verschiebungen des Brühkolbens in die zwei horizontalen Raumrichtungen erfüllt. Große Verschiebungswege sind nicht erforderlich. Denn bei einem Verkippen der Brühkammer relativ zum Brühkolben - regelmäßig mit einer oberseitigen Öffnung von der Gewindespindel weg - fluchten die vertikalen Achsen des Brühkolbens einerseits und der Brühkammer andererseits nicht mehr. Um dennoch ein Eintauchen des Brühkolbens in die Öffnung der Brühkammer zu ermöglichen, kann er sich geringfügig verschieben lassen. Mit fortschreitendem Eintauchen auf eine Bodenfläche der Brühkammer hin kann er sich aufgrund seiner Lagerung von der geneigten Brühkammer der Gewindespindel näher rücken lassen und damit dem geneigten Verlauf der Innenwandung der Brühkammer folgen.

Nach einer weiteren vorteilhaften Ausgestaltungsform der Erfindung kann der Kaffeevollautomat daher ein Linearlager beispielsweise nach dem Nut- und Federprinzip aufweisen. Das Lager kann umfangseitig am Brühkolben vorgesehen sein, wobei entweder die Nut am Brühkolben und die Feder am Deckenabschnitt angeordnet ist oder umgekehrt. Die Nut kann so tief bemessen sein, dass die Feder in zwei horizontalen Raumrichtungen den erforderlichen Verschiebeweg erhält, ohne an einer gegenüberliegenden Seite aus der Nut zu rutschen. Die Lagerung nach dem Nut- und Federprinzip ist besonders einfach herzustellen, trägt kaum auf und ist weitgehend wartungsfrei.

Der Kaffeevollautomat kann an der dem Deckenabschnitt zugewandten Seite des Brühkolbens eine an seinem Umfang umlaufende überstehende Kante aufweisen, die die Feder bildet. Die Kante kann wie der Brühkolben eine kreisförmige Kontur oder alternativ beispielsweise eine quadratischen Kontur aufweisen, wenn der Brühkolben auf einer quadratischen, gegenüber der Deckplatte verschiebbaren Platte sitzt. Die Feder kann in eine sie bzw. den Brühkolben vollständig umfassende Führung mit einem senkrechten Führungssteg, einem davon waagrecht nach innen gerichteten bzw. abstehenden Führungsflansch und dem Deckenabschnitt als Nut eingreifen, die an der Unterseite des Deckenabschnitts angeordnet ist. Die Führung umrahmt eine Öffnung, durch die der Brühkolben hindurchragt. Sie besitzt einen größeren Durchmesser bzw. größere Abmessungen als der Brühkolben, um ihm einen Bewegungs- bzw. Verschiebungsspielraum zu bieten. Der Führungssteg, der Führungsflansch und die umlaufende Kante an der Platte können problemlos derart gestaltet und bemessen sein, dass der Brühkolben bei einer Translation nicht aus der Öffnung heraus gleiten kann. Je größer die Öffnung der Führung ist, desto größere Verschiebung des Brühkolbens lässt sie zu. Auch muss die Führung den Brühkolben nicht vollständig umgeben, sondern kann ggf. abschnittsweise ausgebildet sein, beispielsweise unter Auslassung der Ecken bei einer quadratischen Anordnung.

In einer zweiten Ausgestaltungsvariante des erfindungsgemäßen Kaffeevollautomaten kann er ein radiales Dreh-Gleitlager oder Drehschubgelenk mit einer horizontalen Kippachse umfassen. Es braucht keine vollständige Umdrehung um 360° zu ermöglichen, sondern lediglich ein Kippen. Die Verkippung kann in einem Bereich von etwa 30° und 3° oder auch von nur etwa 10° und 5° liegen. Damit kann das Drehschubgelenk im Querschnitt nur einen Kreisabschnitt als Kippachse aufweisen. Es verfügt über genau zwei Freiheitsgrade, indem der Brühkolben in einer horizontalen Richtung axial verschoben und in einer dazu orthogonalen Dreh- bzw. Kipprichtung mit der axialen Verschieberichtung als Kippachse verschwenkt werden kann. Eine Drehung um eine vertikale Achse des Brühkolbens lässt sich vermeiden. Auch das radiale Dreh-Gleitlager lässt eine Anpassung der Lage des Brühkolbens an eine verkippte Brühkammer zu, wobei die Verschiebe- und Kippachse sowohl parallel also auch orthogonal auf eine Kippachse der Brühkammer stehen kann. Das radiale Dreh-Gleitlager verhindert gegenüber dem Linearlager nach dem Nut- und Federprinzip, dass der Brühkolben bei einer ungewollten Rotation um seine vertikale Achse innerhalb des Linearlagers verkantet.

Nach einer weiteren vorteilhaften Ausgestaltung der Erfindung kann der Kaffeevollautomat ein Linearlager nach dem oben beschriebenen Nut- und Federprinzip in einer ersten horizontalen Raumrichtung aufweisen, das am Brühkolben an zwei sich gegenüberliegenden parallelen Seiten angeordnet ist, und ein Dreh- bzw. Kipplager mit einem Kippelement, das ein Verkippen um eine dazu parallelen Kippachse ermöglicht. Das Kipplager kann ein lang gestrecktes rippenförmiges konvexes Kippelement umfassen, das entweder am Brühkolben oder am Deckenabschnitt angebracht sein kann und mit einer entsprechend geformten konkaven Lagerschale am anderen Bauteil zusammen wirken kann. Es kann im Querschnitt zum Beispiel halb- oder viertelkreisförmig ausgebildet sein oder einen anderen Kippwinkel von weniger als 180° ermöglichen.

Nach einer dazu alternativen Ausgestaltung der Erfindung kann das Kippelement beispielsweise Hinterschnitte aufweisen, in die der Brühkolben eingreift, und die eine axiale Verschiebung des Brühkolbens gegenüber dem Deckenabschnitt zulassen, ohne dass eine Verschiebung orthogonal dazu möglich wäre. Damit kann sie die Funktion der Linearführung der Nut- und Feder-Lagerung übernehmen und jene entfallen. Die Kippachse verläuft damit in Verschieberichtung. Trotzdem bleibt das Lager einfach und wartungsarm. Mit einem Lager, das eine Verschiebe- und eine Kippmöglichkeit bietet, kann sich das Lager gegenüber einer verkippten Brühkammer derart ausrichten, dass ihre vertikalen Achsen weitgehend parallel verlaufen. Dadurch kann eine Zwängung der Brühkammer gegenüber dem Brühkolben zumindest reduziert werden.

In einer dritten Ausgestaltungsvariante des erfindungsgemäßen Kaffeevollautomaten kann ein Kalottenlager vorgesehen sein. Das Kalottenlager, das auch als Radialaxiallager oder Kugelgelenk beschrieben werden kann, das in jede Kipprichtung ein Verschwenken von maximal 180° und vorzugsweise um etwa 90° zulässt, unterbindet alle Translationsbewegungen. Es lässt jedoch ein stufenloses Kippen um die zwei horizontalen Raumrichtungen als Kippachsen zu, indem ein Kalottenkopf am Deckenabschnitt und eine Gelenk- oder Kalottenpfanne am Brühkolben angeordnet sein kann oder umgekehrt. Die mögliche Rotation des Brühkolbens um dessen senkrechte Achse ist zur Lösung der erfindungsgemäßen Aufgabe ohne Belang. Eine separate Halterung kann den Brühkolben in vertikaler Richtung am Deckenabschnitt sichern. Das Kalottenlager bietet ebenfalls einen einfachen Aufbau, der zudem verschmutzungsunanfällig ist. Auch ein Kalottenlager kann die koaxiale Ausrichtung des Brühkolbens und der Brühkammer begünstigen bzw. bewerkstelligen.

Nach einer weiteren Ausführungsform des Kaffeevollautomaten kann eine elastische Lagerung des Brühkolbens am Deckenabschnitt vorgesehen sein. Sie kann durch einen Elastomerquader, z.B. aus Gummi, PU-Schaum o.ä., gebildet werden. Es lässt jedenfalls ein geringfügiges Kippen um zwei horizontale Achsen zu, sogar eine gewisse Translation in denselben Richtungen. Über die Dicke des Lagers und die Steifigkeit seines Materials lässt sich der maximale Kippwinkel des Brühkolbens definieren. Damit kann ein besonders einfaches Lager ausgebildet werden, das aufgrund seiner kompakten Bauweise nur einen geringen Platz- und Herstellungsaufwand erfordert und wegen seiner geschlossenen Bauform verschmutzungsunanfällig ist.

Bei allen Ausführungsformen ist es von Vorteil, wenn sich nach einer weiteren Ausgestaltungsform des erfindungsgemäßen Kaffeevollautomaten der Brühkolben von der der Brühkammer zugewandten Seite in einer Richtung zum Deckenabschnitt hin verjüngt. Bei stärkeren Auslenkungen der Brühkammer kann dadurch verhindert werden, dass ihre zylindrische Wandung in Kontakt mit einer Mantelfläche des Brühkolbens gerät und ein ungewolltes Moment auf den Brühkolben ausübt. Dadurch kann eine weitere Belastung aus einem Verkippen der Brühkammer von der Gewindespindel ferngehalten werden.

Nach einer weiteren vorteilhaften Ausgestaltungsform des Kaffeevollautomaten können zumindest der Brühkolben und dessen Lagerung als Spritzgussteile aus Kunststoff ausgebildet sein. Dieses Herstellungsverfahren ermöglicht eine sehr kostengünstige und einfache Herstellung, der auch die Ausbildung der meisten der oben beschriebenen Lager nicht hinderlich entgegensteht.

Nach einer weiteren vorteilhaften Ausgestaltungsform der Erfindung können diejenigen der obigen Ausgestaltungsformen der Lager, bei denen Lagerflächen relativ zueinander verschoben werden, also beim zweiachsigen Linearlager, beim radialen Dreh-Gleitlager und beim Kalottenlager, mit einer Selbstschmierung der aneinander gleitenden Lagerflächen ausgebildet werden. Damit kann die Gleitfähigkeit und die Funktion des Lagers ohne Wartungsaufwand aufrechterhalten werden. Alternativ dazu und im Hinblick auf die Verwendung in einer Vorrichtung zur Nahrungsmittelverarbeitung können die oben genannten Lager mit schmierstofffreien Lagerflächen ausgebildet sein. Dafür sind insbesondere Werkstoffpaarungen aus Kunststoffen wie POM/PDT-, POM/PA- oder PDT/PA-Paarungen in Betracht zu ziehen. Eine Kontamination eines Kaffeegetränks mit Schmierstoff ist damit bei uneingeschränkter Funktion der Lager ausgeschlossen.

Das Prinzip der Erfindung wird im Folgenden anhand von Zeichnungen beispielshalber noch näher erläutert. In der Zeichnung zeigen:
- Figuren 1a, 1b:: den schematischen Aufbau einer Spindelbrüheinheit mit einem Linearlager anhand zweier senkrechter Schnitte durch die Spindelbrüheinheit,
- Figuren 2a, 2b:: den schematischen Aufbau einer Spindelbrüheinheit mit einem radialen Gleitlager anhand zweier senkrechter Schnitte durch die Spindelbrüheinheit,
- Figuren 3a, 3b:: den schematischen Aufbau einer Spindelbrüheinheit mit einem Kalottenlager anhand zweier senkrechter Schnitte.

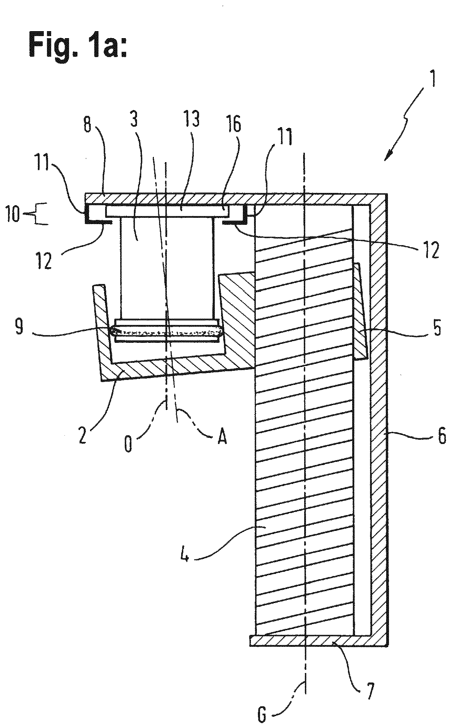

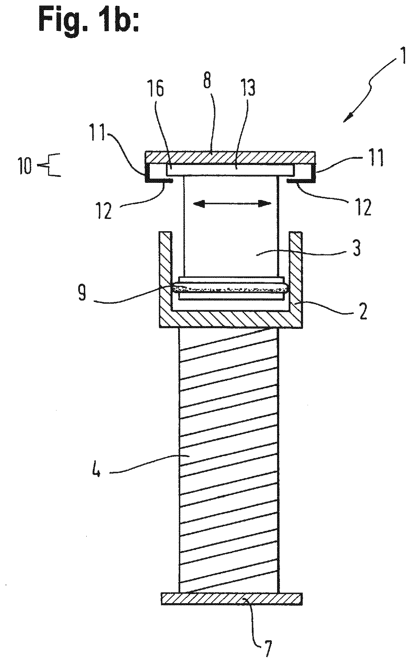

Fig. 1 a und 1b zeigen in zwei rechtwinklig zueinander stehenden Schnittansichten schematisch den Aufbau einer Spindelbrüheinheit 1 mit einem Linearlager. Die Spindelbrüheinheit 1 ist in einem C-förmigen Gehäuse untergebracht, welches einen Ständerabschnitt 6, einen Bodenabschnitt 7 und einen Deckenabschnitt 8 umfasst. Zwischen Bodenabschnitt 7 und Deckenabschnitt 8 ist parallel zum Ständerabschnitt 6 eine Gewindespindel 4 angeordnet. Auf der Gewindespindel 4 läuft eine Spindelmutter 5, die mit einer zylindrische Brühkammer 2 verbunden ist. Damit ist die Brühkammer 2 vertikal beweglich ausgeführt. Am Deckenabschnitt 8 ist eine Führung 10 vorgesehen, die im Grundriss quadratisch angeordnete und vertikal nach unten abstehende Führungsstege 11 und horizontale Flansche an den Führungsstegen 12 als Führungsflächen 12 umfasst. In die Führung 10 greift eine umlaufende Kante 16 einer quadratischen Platte 13 ein, an der ein zylindrischer Brühkolben 3 hängt. Die Abmessungen der Platte 16 sind derart ausgestaltet, dass jene innerhalb der Führung 10 in allen horizontalen Raumrichtungen geringfügig verschoben werden kann, aber ein Herausrutschen des Brühkolbens 3 aus der Führung 10 verhindern. Am unteren Ende des Brühkolbens 3 ist zu Dichtungszwecken ein O-Ring 9 angebracht, der die Brühkammer 2 während eines Brühvorgangs zusammen mit dem Brühkolben 3 abdichtet.

Während des Betriebs des Kaffeevollautomaten verlaufen die Drehachse G der Gewindespindel 4 und die Zylinderachsen A, O der Brühkammer 2 und des Brühkolbens 3 im Idealfall parallel, letztere fallen sogar zusammen. Unter der Belastung des Brühvorgangs kann es aber zu einem Verkippen oder Verkanten der Brühkammer 2 gegenüber der Gewindespindel 4 kommen, so dass ihre Achsen G, A sowohl in einer gemeinsamen Ebene einen Winkel zueinander einschließen (s. Fig. 1a) als auch in einer dazu orthogonalen Projektion, so dass sie also windschief zueinander verlaufen. Damit fluchten auch die Zylinderachsen A, O der Brühkammer 2 und des Brühkolbens 3 nicht mehr. Der Brühkolben 3 könnte im Extremfall in der Brühkammer 2 verklemmen, wobei jedenfalls der Dichtring 9 stark verformt würde.

Durch seine in zwei Freiheitsgraden horizontal verschiebbare Lagerung in der Führung 10 aber kann sich der Brühkolben 3 der verkippten Brühkammer 2 anpassen, indem er sich von der Brühkammer 3 in einer Richtung von der Gewindespindel 4 weg drücken und ggf. rechtwinklig dazu verschieben lässt. Denn bei verkippter Brühkammer 2 taucht der Brühkolben 3 zunächst in einer von der Gewindespindel 4 weiter entfernten Stellung in die Brühkammer 2 ein. Mit fortschreitender vertikaler Fahrt der Brühkammer 2 auf den Deckenabschnitt 8 hin rückt sie den Brühkolben 3 näher an die Gewindespindel 4 heran. Ist die Brühkammer 2 zusätzlich auch seitlich verkippt, also in einer Ansicht gemäß Fig. 1b, so könnte der Brühkolben 3 in gleicher Weise auch diese Verkippung kompensieren. Durch die Bewegungsfreiheit des Brühkolbens 3 in den zwei horizontalen Verschieberichtungen lassen sich Kräfte aus Zwängungen infolge der verkippten Brühkammer 2 abbauen, so dass der O-Ring 9 geringeren Verformungen unterworfen ist, das Gehäuse weniger Kräfte abtragen und daher weniger steif ausgeführt zu sein braucht.

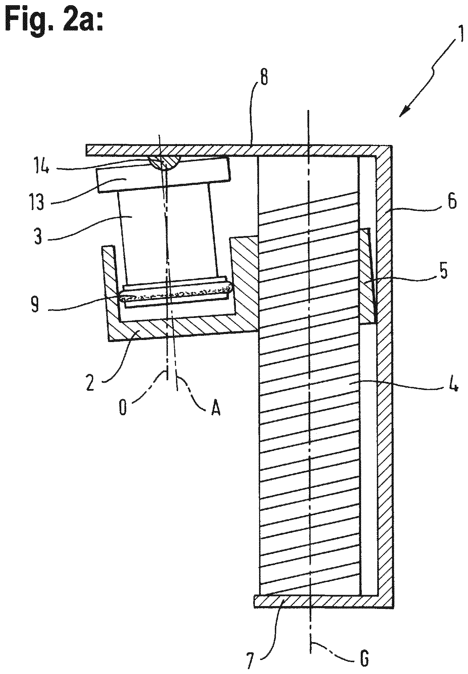

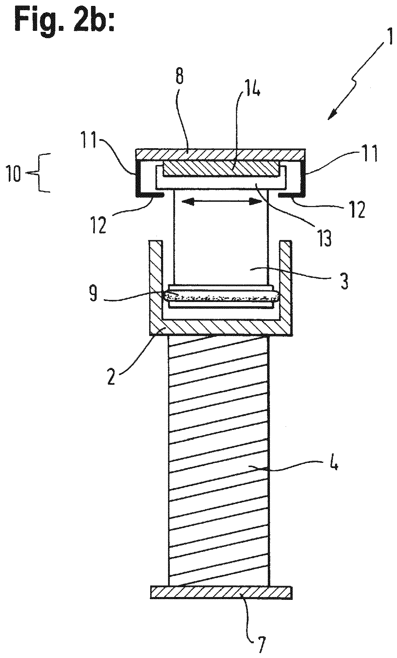

In Fig. 2a und 2b ist eine zweite Ausführungsvariante in Form eines radialen Gleitlagers gezeigt. In den beiden Schnittansichten ist wiederum die Spindelbrüheinheit 1 mit dem C-förmigen Gehäuse für die Brühkammer 2, den Brühkolben 3 und die Gewindespindel 4 gezeigt. Der Brühkolben 3 sitzt an der quadratischen Platte 13, auf der abweichend von der obigen Ausführungsform ein Kippelement 14 angeordnet ist, das ein Kippen des Brühkolbens 3 um eine horizontale Kippachse parallel zur Ansichtsrichtung der Fig. 2a ermöglicht. Die Platte 13 ist mit ihrer umlaufende Kante 16 in einer waagrechten orthogonalen Richtung zur Achse der Gewindespindel 4 in der Führung aus den Führungsstegen 11 und Führungsflächen 12 geführt (vgl. Fig. 2b). Sie lässt eine Bewegung ausschließlich in den zwei waagrechten Richtungen quer zur Gewindespindel 4 und damit in Richtung einer Kippachse des Kippelements 14 zu.

Kommt es beim vertikalen Verfahren der Brühkammer 2 in Richtung auf den Brühkolben 3 hin zu einem Verkippen der Brühkammer 2 gegenüber der Gewindespindel 4, kann der Brühkolben 3 ebenfalls verkippen und damit der Ausrichtung der Brühkammer 2 anpassen. Zusätzlich lässt er sich in Richtung seiner Kippachse verschieben. Denn je tiefer der Brühkolben 3 in die verkippte Brühkammer 2 eintaucht, umso näher rückt er der Gewindespindel 4. Dadurch kann ein Verklemmen zwischen der Brühkammer 2 und dem Brühkolben 3 verhindert werden.

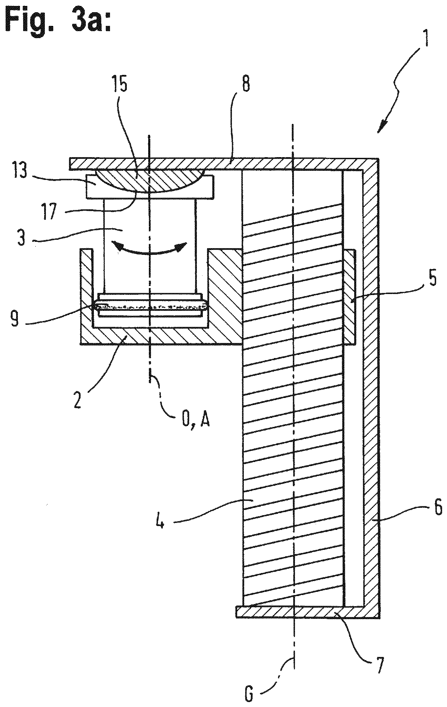

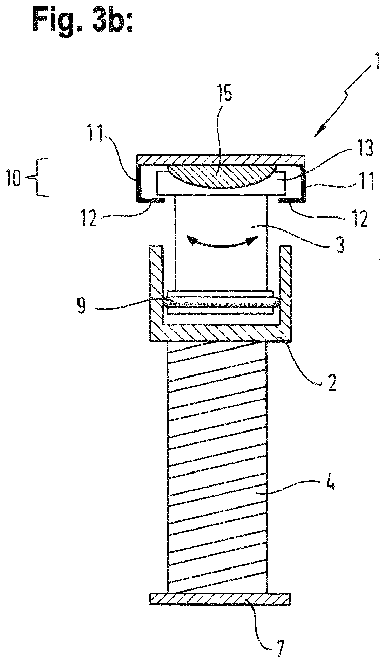

Die dritte Ausführungsvariante umfasst ein Kalottenlager. Dazu ist in Fig. 3a und 3b die an sich bekannte Spindelbrüheinheit 1 wiederum mit dem Ständerabschnitt 6, dem Bodenabschnitt 7 und dem Deckenabschnitt 8 als C-förmigem Gehäuse gezeigt, in dem die Gewindespindel 4 mit der Brühkammer 2 an der Spindelmutter 5 angeordnet ist. An der Unterseite des Deckenabschnitts 8 ist abweichend gegenüber den bisherigen Ausführungsformen ein Lagerelement 15 in Form eines konvexen Kugelabschnitts angeordnet. Korrespondierend dazu besitzt der Brühkolben 3 eine konkave Aufnahme 17 an der quadratischen Platte 13, in die das Lagerelement 15 eingreift. Über das Lagerelement 15 kann die Brühkammer 3 in diverse Richtungen gekippt werden. Die Führung 10 hält die Platte 13 lediglich in vertikaler Richtung, damit der Brühkolben 3 sich nicht vom Deckenabschnitt 8 löst. Die Brühkammer 2 ist nicht verkippt dargestellt, weshalb ihre Zylinderachse A mit derjenigen des Brühkolbens O zusammenfällt und sich parallel zur Spindelachse G erstreckt.

Bei einem Verkippen der Brühkammer 2 unter der Last des Brühvorgangs kann sich folglich der Brühkolben 3 der Verkippung der Brühkammer 2 um Kippachsen in beide horizontale Raumrichtungen anpassen. Damit entfallen Belastungen aus Zwängungen, die anderenfalls den O-Ring 9 beanspruchen und vom Brühkolben 3 auf das Gehäuse und von der Brühkammer 2 über die Gewindespindel 4 auf das Gehäuse übertragen würden. Mit dem Entfall der Belastungen steigt die Lebensdauer des O-Rings 9, und das Gehäuse kann weniger steif und aufwändig ausgestaltet werden, was insgesamt die Zuverlässigkeit des Kaffeevollautomaten erhöht und seine Herstellungskosten reduziert.

Da es sich bei den vorhergehenden, detailliert beschriebenen Lagern für Kaffeevollautomaten für Haushaltszwecke um Ausführungsbeispiele handelt, können sie in üblicher Weise vom Fachmann in einem weiten Umfang modifiziert werden, ohne den Bereich der Erfindung zu verlassen. Insbesondere kann die Anordnung der Lager vom Deckenabschnitt zum Brühkolben hin geändert werden und folglich die Ausgestaltung der Spindelbrüheinheit in anderer Form als in der hier beschriebenen erfolgen. Ebenso kann die Ausgestaltung der Führungen am Deckenabschnitt oder die Ausgestaltung der umlaufenden Kante in einer anderen Form vorgenommen werden, wenn dies z.B. aus designerischen Gründen notwendig ist. Weiter schließt die Verwendung der unbestimmten Artikel "ein" bzw. "eine" nicht aus, dass die betreffenden Merkmale auch mehrfach bzw. mehrmals vorhanden sein können.

### Bezugszeichenliste

- 1: Spindelbrüheinheit
- 2: Brühkammer
- 3: Brühkolben
- 4: Gewindespindel
- 5: Spindelmutter
- 6: Ständerabschnitt
- 7: Bodenabschnitt
- 8: Deckenabschnitt
- 9: O-Ring
- 10: Führung
- 11: Führungssteg
- 12: Führungsfläche
- 13: Platte
- 14: Kippelement
- 15: Lagerelement
- 16: Kante
- 17: Aufnahme

- G: Achse der Gewindespindel
- A: Zylinderachse der Brühkammer
- O: Zylinderachse des Brühkolbens

## Patentansprüche

1. Kaffeevollautomat für Haushaltszwecke mit einer Brühvorrichtung und einem Gehäuse dafür, in dem eine angetriebene und verlagerbare Brühkammer (2) geführt ist und an dem ein ortsfest gelagerter Brühkolben (3) befestigt ist, **dadurch gekennzeichnet, dass** der Brühkolben (3) in einem Lager gehaltert ist, das mindestens zwei Freiheitsgrade bietet.

2. Kaffeevollautomat für Haushaltszwecke nach Anspruch 1, **dadurch gekennzeichnet, dass** das Lager genau zwei Freiheitsgrade bietet.

3. Kaffeevollautomat für Haushaltszwecke nach Anspruch 1 oder 2, **gekennzeichnet durch** ein Linearlager.

4. Kaffeevollautomat für Haushaltszwecke nach Anspruch 3, **gekennzeichnet durch** ein Linearlager nach dem Nut- und Federprinzip, das den Brühkolben (3) umfangseitig umgibt, wobei entweder die Nut an dem Brühkolben (3) und die Feder am Deckenabschnitt (8) angeordnet ist oder umgekehrt und die Nut in der Feder in zwei horizontalen Raumrichtungen begrenzt verschiebbar ist.

5. Kaffeevollautomat nach Anspruch 4, **dadurch gekennzeichnet, dass** an der dem Deckenabschnitt (8) zugewandten Seite des Brühkolbens (3) eine umlaufende Kante (16) angeordnet ist, welche in eine den Brühkolben (3) vollständig umfassende Führung (10) mit einem vertikalen Führungssteg (11) und einer horizontalen Führungsfläche (12) eingreift, wobei die Führung (10) an der Unterseite des Deckenabschnitts (8) angeordnet ist.

6. Kaffeevollautomat für Haushaltszwecke nach Anspruch 1 oder 2, **gekennzeichnet durch** ein radiales Gleitlager.

7. Kaffeevollautomat für Haushaltszwecke nach Anspruch 6, **gekennzeichnet durch** ein Lager nach dem Nut- und Federprinzip in einer ersten horizontalen Raumrichtung und durch ein Kippelement (14), welches ein Verkippen um eine horizontale Achse parallel zur ersten horizontalen Raumrichtung ermöglicht.

8. Kaffeevollautomat für Haushaltszwecke nach Anspruch 1 oder 2, **gekennzeichnet durch** ein Kalottenlager.

9. Kaffeevollautomat für Haushaltszwecke nach Anspruch 1 oder 2, **gekennzeichnet durch** eine elastische Lagerung des Brühkolbens (3) am Deckenabschnitt (8).

10. Kaffeevollautomat für Haushaltszwecke nach einem der vorgenannten Ansprüche, **dadurch gekennzeichnet, dass** sich der Brühkolben (3) von seiner der Brühkammer (2) zugewandten Seite in Richtung des Deckenabschnitts (8) verjüngt.

## Claims

1. Fully automatic coffee maker for domestic use with a brewing apparatus and a housing therefor, in which a motorised and movable brewing chamber (2) is guided, and to which a fixedly mounted brewing piston (3) is fastened, **characterised in that** the brewing piston (3) is held in a bearing which offers at least two degrees of freedom.

2. Fully automatic coffee maker for domestic use according to claim 1, **characterised in that** the bearing offers precisely two degrees of freedom.

3. Fully automatic coffee maker for domestic use according to claim 1 or 2, **characterised by** a linear bearing.

4. Fully automatic coffee maker for domestic use according to claim 3, **characterised by** a linear bearing according to the tongue and groove principle, which surrounds the periphery of the brewing piston (3), wherein either the groove is arranged on the brewing piston (3) and the spring on the cover section (8) or vice versa and the groove can be displaced in the tongue to a limited degree in two horizontal spatial directions.

5. Fully automatic coffee maker according to claim 4, **characterised in that** a peripheral edge (16) which engages in a guide (10) which completely encompasses the brewing piston (3) and has a vertical guide web (11) and a horizontal guiding surface (12) is arranged on the side of the brewing piston (3) facing the cover section (8), wherein the guide (10) is arranged on the lower side of the cover section (8).

6. Fully automatic coffee maker for domestic use according to claim 1 or 2, **characterised by** a radial slide bearing.

7. Fully automatic coffee maker for domestic use according to claim 6, **characterised by** a bearing according to the tongue and groove principle in a first horizontal spatial direction and by a tilting element (14), which permits a tilting about a horizontal axis in parallel to the first horizontal spatial direction.

8. Fully automatic coffee maker for domestic use according to claim 1 or 2, **characterised by** a cup and ball bearing.

9. Fully automatic coffee maker for domestic use according to claim 1 or 2, **characterised by** an elastic bearing of the brewing piston (3) on the cover section (8).

10. Fully automatic coffee maker for domestic use according to one of the afore-cited claims, **characterised in that** the brewing piston (3) tapers from its side facing the brewing chamber (2) in the direction of the cover section (8).

## Revendications

1. Machine à café à usage domestique comportant un dispositif d'infusion et un boîtier pour celui-ci, dans lequel passe une chambre d'infusion (2) entraînée et déplaçable et sur lequel est fixé un piston d'infusion (3) logé stationnaire, **caractérisée en ce que** le piston d'infusion (3) est maintenu dans un palier qui offre au moins deux degrés de liberté.

2. Machine à café à usage domestique selon la revendication 1, **caractérisée en ce que** le palier offre exactement deux degrés de liberté.

3. Machine à café à usage domestique selon la revendication 1 ou 2, **caractérisée par** un palier linéaire.

4. Machine à café à usage domestique selon la revendication 3, **caractérisée par** un palier linéaire selon le principe rainure-ressort, lequel entoure le piston d'infusion (3) sur son pourtour, la rainure étant agencée sur le piston d'infusion (3) et le ressort étant agencé sur la partie de recouvrement (8), ou inversement, et la rainure pouvant coulisser dans certaines limites dans le ressort dans deux directions spatiales horizontales.

5. Machine à café selon la revendication 4, **caractérisée en ce qu'**est agencé, sur le côté du piston d'infusion (3) tourné vers la partie de recouvrement (8), un bord périphérique (16) qui s'engage dans un guidage (10) entourant entièrement le piston d'infusion (3) et comportant une nervure de guidage verticale (11) et une surface de guidage horizontale (12), le guidage (10) étant agencé sur la face inférieure de la partie de recouvrement (8).

6. Machine à café à usage domestique selon la revendication 1 ou 2, **caractérisée par** un palier lisse radial.

7. Machine à café à usage domestique selon la revendication 6, **caractérisée par** un palier selon le principe rainure-ressort dans une première direction spatiale horizontale et par un élément basculant (14) qui permet de basculer autour d'un axe horizontal parallèlement à la première direction spatiale horizontale.

8. Machine à café à usage domestique selon la revendication 1 ou 2, **caractérisée par** un palier à calotte.

9. Machine à café à usage domestique selon la revendication 1 ou 2, **caractérisée par** un logement élastique du piston d'infusion (3) sur la partie de recouvrement (8).

10. Machine à café à usage domestique selon l'une des revendications précédentes, **caractérisée en ce que** le piston d'infusion (3) s'amincit de son côté tourné vers la chambre d'infusion (2) en direction de la partie de recouvrement (8).
